# EUROPÄISCHE PATENTSCHRIFT

(11) **EP 2 848 783 B1**
(45) Veröffentlichungstag und Bekanntmachung des Hinweises auf die Patenterteilung: **31.01.2018**
(21) Anmeldenummer: 14178829.9
(22) Anmeldetag: 28.07.2014
(51) Int. Cl.: F02D 41/00, F02D 41/40, F01N 9/00, F02D 13/02, F02D 41/14, F02D 41/02, F01N 3/023

(54) **Verfahren zum Betreiben einer Brennkraftmaschine**
Method for operating a combustion engine
Procédé destiné au fonctionnement d'un moteur à combustion interne

(30) Priorität: 17.09.2013 DE 102013218581
(43) Veröffentlichungstag der Anmeldung: 18.03.2015
(73) Patentinhaber: Volkswagen Aktiengesellschaft, 38440 Wolfsburg (DE)
(72) Erfinder: Groenendijk, Axel, Dr., 38518 Gifhorn (DE)

(56) Entgegenhaltungen:
- DE-A1-102005 015 853
- US-A1- 2003 221 421
- US-A1- 2011 072 792
- US-A1- 2011 072 795
- US-A1- 2013 167 508

## Beschreibung

Die Erfindung betrifft ein Verfahren zum Betreiben einer Brennkraftmaschine.

Im Zuge der sich stetig verschärfenden Abgasvorschriften für Kraftfahrzeuge spielt die weitere Verringerung von als Schadstoffen deklarierten Abgasbestandteilen eine wesentliche Rolle bei der Weiterentwicklung von Brennkraftmaschinen.

Bei Dieselmotoren stellt insbesondere die Verringerung der ausgestoßenen (Ruß-) Partikel sowie der im Vergleich zu Ottomotoren infolge der mageren Verbrennung prinzipbedingt relativ hohen Stickoxidemissionen (NOx) einen Focus der Entwicklung dar.

Eine Verringerung der Partikel kann wirkungsvoll und mit vertretbarem Aufwand mittels Partikelfiltern erreicht werden, die Partikel aus dem Abgas filtern, zwischenspeichern und beim Erreichen einer Beladungsgrenze regeneriert werden, wobei die Partikel in CO2 umgewandelt werden. Die Regeneration erfolgt durch Abbrennen der Partikel infolge einer Oxidation des Kohlenstoffanteils der Partikel mit dem im Abgas vorhandenen Sauerstoff. Hierfür sind normalerweise Abgastemperaturen von mindestens 600°C erforderlich, die regelmäßig nur im Nennleistungsbetrieb der Brennkraftmaschine erreicht werden und sich im normalen Fahrbetrieb eher selten einstellen. Daher werden für die Regeneration regelmäßig weitere Maßnahmen getroffen, um die Rußabbrandtemperatur zu senken und/oder die Abgastemperatur zu erhöhen. Bekannt sind innermotorische Maßnahmen, die z.B. durch eine Nacheinspritzung darauf abzielen, gezielt unverbrannte Kraftstoffbestanteile im Abgas zu erhalten, die dort exotherm oxidieren und dadurch zu einer Erhöhung der Abgastemperatur führen. Anstelle der innermotorischen Maßnahmen ist es von dem sogenannten HCl-System auch bekannt, Dieselkraftstoff vor einem Katalysator in den Abgasstrang einzuspritzen und dann in diesem katalytisch zu verbrennen, um die Abgastemperatur zu erhöhen. Daneben kommen auch Additiv-gestützte Regenerationsmethoden sowie katalytische Beschichtungen für den Partikelfilter zum Einsatz. Diese dienen dazu, die für den Rußabbrand erforderliche Temperatur zu senken.

Eine Verringerung der Stickoxide kann ebenfalls mittels innermotorischer Maßnahmen, insbesondere einer Abgasrückführung, erzielt werden. Durch die Abgasrückführung können die bei der Verbrennung in den Brennräumen auftretenden Spitzentemperaturen gesenkt werden, was zu der gewünschten Verringerung der Stickoxide (NOₓ) im Abgas führt.

Ein Erreichen zukünftiger Abgasvorschriften hinsichtlich der Stickoxid-Emissionen wird durch den ausschließlichen Einsatz von innermotorischen Maßnahmen voraussichtlich nicht zu erreichen sein. Die Umsetzung zusätzlicher Maßnahmen wird daher notwendig sein.

Bekannt ist, die Stickoxide im Abgas mittels sogenannter SCR-Verfahren, d.h. Verfahren zur selektiven katalytischen Reduktion, zu verringern. SCR-Verfahren beruhen darauf, die im Abgas enthaltene Stickoxide durch ein in das Abgas eingebrachtes Reduktionsmittel, insbesondere Ammoniak, in nicht als Schadstoffe deklarierte Endprodukte wie Stickstoff, Kohlendioxid und Wasser umzuwandeln. Durch ein SCR-Verfahren kann eine sehr hohe Reduktionsrate über nahezu den gesamten Betriebsbereich der Brennkraftmaschine mit den damit verbundenen stark schwankenden Abgastemperaturen erreicht werden. Nachteilig ist jedoch der konstruktive Aufwand für die SCR-Vorrichtung sowie der von dieser beanspruchte Bauraum im Kraftfahrzeug. Eine Abgasnachbehandlung mittels SCR-Verfahren erfolgt daher bislang zumeist nur in relativ großen und somit schweren Kraftfahrzeugen, bei denen die Einhaltung auch der aktuellen Abgasvorschriften mittels alternativer Verfahren nicht zu erreichen gewesen wäre.

Bei kleineren und leichteren Kraftfahrzeugen wird zur weiteren Verringerung der Stickoxid-Emissionen verstärkt auf NOₓ-Speicherkatalysatoren gesetzt. Hintergrund ist, dass für eine Reduktion von Stickoxiden mit CO zu N₂, O₂ und CO₂, wie es in konventionellen Drei-Wege-Katalysatoren von Ottomotoren umgesetzt wird, ein stöchiometrisches Verhältnis von Sauerstoff und unverbrannten Kraftstoffbestandteilen (insbesondere HC-Verbindungen) im Abgas erforderlich ist. Die NOₓ-Speicherkatalysatoren sollen die im Abgas enthaltenen Stickoxide zwischenspeichern. Hierzu wird NO in einem vorgelagerten Oxidationskatalysator zunächst zu NO₂ oxidiert, da Speicherkatalysatoren nur NO₂ speichern können. Das NO₂ wird dann im NOₓ-Speicherkatalysator gespeichert, indem es mit den Verbindungen der Katalysatoroberfläche und Sauerstoff aus dem mageren Dieselabgas zu Nitraten reagiert. Beim Erreichen der Aufnahmekapazität wird eine Regeneration eingeleitet, bei der durch innermotorische Maßnahmen, insbesondere eine Nacheinspritzung, kurzzeitig ein fettes Brennstoff-LuftVerhältnis in den Brennräumen eingestellt wird. Dadurch kann das für die Auslösung der Nitratbindung und die Reduktion der Nitrate zu Stickstoff erforderliche Verhältnis von Sauerstoff und unverbrannten Kraftstoffbestandteilen im Abgas eingestellt werden. Wesentlicher Vorteil der Verringerung der NOₓ-Emissionen mittels NOₓ-Speicherkatalysatoren ist der im Vergleich zu einem SCR-System geringe Zusatzaufwand. Nachteilig ist jedoch, dass NOₓ-Speicherkatalysatoren regelmäßig nur in einem Temperaturbereich von ca. 250°C bis ca. 450°C und somit nur bei niedrigen bis mittleren Lasten der Brennkraftmaschine speichern können. Bei darunter liegenden Temperaturen ist die Oxidation von NO zu NO₂ (in einem stromauf des NOₓ-Speicherkatalysators angeordneten Oxidationskatalysators) sehr langsam, bei darüber liegenden Temperaturen ist das NO₂ nicht stabil.

Unter der Bezeichnung DPNR (Diesel Particulate NOx Reduction) ist ein Abgasnachbehandlungssystem bekannt geworden, dass unter Verwendung eines speziellen Speicherkatalysators die gleichzeitige Reduzierung von Partikel- und NOₓ-Emissionen ermöglicht. Teil dieses Abgasnachbehandlungssystems ist eine zusätzliche Einspritzdüse im Abgasstrang, die dazu eingesetzt wird, das Abgas zur Regeneration des Speicherkatalysators anzufetten. Als Vorteil dieser Vorgehensweise gegenüber der innermotorischen Anfettung der Abgaszusammensetzung wird angesehen, das eine (negative) Beeinflussung der innermotorischen Brennprozesse und damit des Betriebsverhaltens des Verbrennungsmotors unterbleibt.

In der im Rahmen des "20. Aachener Kolloquiums Fahrzeug- und Motorentechnik 2011" erfolgten Veröffentlichung von Mikio Inoue et al.: "Di-Air: The New deNOx System for Future Emission Compliance" wird berichtet, dass es möglich sein soll, die Umsetzung von Stickoxiden mittels eines herkömmlichen NOx-Speicherkatalysators bei einem Dieselmotor auch auf höhere Temperaturbereiche auszuweiten, indem aufbauend aus dem DPNR-System mittels der im Abgasstrang angeordneten Einspritzdüse Kohlenwasserstoffe (Dieselkraftstoff) periodisch in den Abgasstrom eingespritzt werden, wodurch eine vielfach als "Wobbel" bezeichnete Zusammensetzung des Abgasstroms erreicht wird, die periodisch um λ = 1 schwankt. Dabei soll die Umsetzung der Stickoxide mit zunehmender Amplitude der Schwankungen gesteigert werden können. Zudem sei dieser Effekt insbesondere bei hohen Lasten und hohen Abgastemperaturen ausgeprägt. Das Di-Air Verfahren soll ermöglichen, einen NOₓ-Speicherkatalysator, der in herkömmlicher Anwendung zur Zwischenspeicherung und diskontinuierlichen Regeneration (Auslösen und Reduktion der Nitrate zu N₂) genutzt wird, zumindest in bestimmten Betriebsbereichen (insbesondere hohe Lasten und/oder Drehzahlen des Verbrennungsmotors) in einer Art kontinuierlicher Regeneration zu betreiben, bei der gleichzeitig und kontinuierlich die Reaktion von NO₂ zu Nitraten und deren Reduktion zu N₂ erfolgt.

Der Ventiltrieb für eine Viertakt-Kolbenbrennkraftmaschine umfasst regelmäßig mindestens ein, vielfach zwei Einlass- und Auslassventile für jeden Zylinder. Diese Einlass- und Auslassventile werden zumeist über Nockenwellen gesteuert, wobei bei Brennkraftmaschinen mit mehr als zwei Ventilen pro Zylinder regelmäßig zwei Nockenwellen zum Einsatz kommen. Vielfach ist die Anordnung dieser Nockenwellen derart, dass eine davon sämtliche Einlassventile und die andere sämtliche Auslassventile steuert. Bekannt sind aber auch Brennkraftmaschinen, bei denen die Nockenwellen jeweils sowohl Einlass- als auch Auslassventile steuern. Diese werden vielfach als "gemischte" Nockenwellen bezeichnet.

Aus der DE 199 08 286 A1 ist ein Ventiltrieb bekannt, bei dem ein rohrförmiger Nockenträger drehfest und axial verschiebbar auf einer Grundwelle angeordnet ist. Der Nockenträger bildet axial versetzt zwei Nocken mit unterschiedlichen Nockenlaufbahnen aus. Durch das axiale Verschieben des Nockenträgers auf der Grundwelle kann ein Gaswechselventil durch die unterschiedlich geformten Nockenlaufbahnen in unterschiedlicher Weise betätigt werden.

Ein solcher Ventiltrieb kann dazu genutzt werden, ein sogenanntes "Scavenging" umzusetzen, bei dem durch eine Überschneidung der Öffnungszeiten der Einlass- und Auslassventile der einzelnen Zylinder in Zeiten eines Überdrucks in dem Frischgasstrang im Vergleich zu dem Druck im Abgasstrang Abgas, das in den Zylindern verblieben ist, und gegebenenfalls Frischgas in den Abgasstrang abzuführen beziehungsweise überströmen zu lassen.

Ein solches Verfahren, umgesetzt bei einem Dieselmotor, ist aus der US 2009/0194080 A1 bekannt. Dort wird die für das Scavenging genutzte Ventilüberschneidung durch schaltbare Zusatznocken für die Einlassventile realisiert, die bei einem Betrieb der Brennkraftmaschine in einem dafür vorgesehenen Betriebsbereich (niedrige Drehzahlen mit mittleren bis hohen Lasten), aktiviert werden und ein zusätzliches Öffnen (sogenanntes zweites Event) der Einlassventile während des Auslasstakts und somit in Überschneidung mit einem Öffnen der Auslassventile bewirken. Durch das Scavenging kann der Abgasmassenstrom durch die Turbine des Abgasturboladers und damit auch der vom Verdichter des Abgasturboladers geförderte Massenstrom erhöht werden. Dies kann gleichzeitig den Wirkungsgrad des Abgasturboladers, damit den Ladedruck und dadurch das erzielbare Drehmoment der Brennkraftmaschine erhöhen.

Aus der US 2011/0174249 A1 ist weiterhin bekannt, basierend auf dem aus der US 2009/0194080 A1 bekannten System, die Öffnungszeiten der Einlassventile während des Einlasstakts so zu verändern, dass diese entweder vor oder nach dem unteren Totpunkt des Kolbens ihre Schließstellung erreichen. Dadurch soll eine Absenkung des Abgasdrucks erreicht werden, wodurch das Druckgefälle zwischen dem Frischgasstrang und dem Abgasstrang, das für das Scavenging erforderlich ist, vergrößert werden kann. Dies soll die Durchführung von Scavenging bei niedrigen Lasten ermöglichen. Alternativ dazu ist in der US 2011/0174249 A1 zudem offenbart, einen Zusatzverdichter vorzusehen, der bei einem Betrieb des Verbrennungsmotors mit niedrigen bis mittleren Lasten für den erhöhten Saugrohrdruck sorgt, der für das Scavenging erforderlich ist. Der Zusatzverdichter soll dabei mechanisch oder auch elektrisch angetrieben sein können.

Die DE 101 40 120 A1 offenbart ein Verfahren zum Betreiben einer mittels eines Abgasturboladers und eines elektrisch angetriebenen Zusatzverdichters aufgeladenen Brennkraftmaschine, bei dem zur Verbesserung des Anfahrverhaltens eines von der Brennkraftmaschine angetriebenen Kraftfahrzeugs eine Sekundäreinspritzung von Kraftstoff in die Zylinder während einer Ventilüberschneidung der dazugehörigen Einlass- und Auslassventile vorgesehen ist. Dadurch kann im Abgasstrang ein zündfähiges Gemisch erzeugt werden, das mittels einer im Abgasstrang angeordneten Zündvorrichtung entzündet wird. Die so gesteigerte Enthalpie des Abgases soll den Wirkungsgrad des Abgasturboladers und damit das Anfahrverhalten des Kraftfahrzeugs verbessern.

Die Schrift US 2013/167508 A1 geht davon aus, dass zur Regeneration eines Partikelfilters eine Kraftstoffnacheinspritzung vorgenommen wird. Wenn allerdings eine Drehzahlverminderung der Brennkraftmaschine während der Regeneration vorliegt, so kann die Abgastemperatur fallen und eine Verwertung des nacheingespritzten Kraftstoffs verhindern. Als Lösung wird vorgeschlagen, die Abgastemperatur zu erhöhen, wenn eine Nacheinspritzung nicht mehr durchgeführt wird, da der Kraftstoff nicht mehr verwertet werden kann. Hierzu werden zweite Events von Einlass- und oder Auslassventilen oder eine negative Ventilüberschneidung vorgeschlagen, um heißes Abgas zurückzuhalten.

Und schließlich ist in der DE 10 2004 001 249 A1 offenbart, einen Katalysator eines aufgeladenen Ottomotors möglichst schnell auf Betriebstemperatur zu bringen, indem im Rahmen eines Spülvorgangs, der durch eine Überschneidung der Ventilsteuerzeiten der Einlass- und Auslassventile erreicht wird, unverbrannte Kraftstoffbestandteile mit Sauerstoff in den Abgasstrang eingebracht werden, wo diese exotherm reagieren und dabei zusätzliche Wärmeenergie zum Aufheizen des Katalysators bereitstellen.

Ausgehend von diesem Stand der Technik lag der Erfindung die Aufgabe zugrunde, bei einer gattungsgemäßen Brennkraftmaschine den Aufwand für die Abgasnachbehandlung zu verringern.

Diese Aufgabe wird durch ein Verfahren zum Betreiben einer Brennkraftmaschine gemäß dem unabhängigen Patentanspruch 1 gelöst. Vorteilhafte Ausgestaltungen des erfindungsgemäßen Verfahrens sind Gegenstand der abhängigen Patentansprüche und ergeben sich aus der nachfolgenden Beschreibung der Erfindung.

Der Erfindung liegt der Gedanke zugrunde, dass durch Scavenging, das gemäß der US 2009/0194080 A1 durch ein zweites Event für die Einlassventile der Brennkraftmaschine erzeugt wird (alternativ oder zusätzlich aber auch durch ein zweites Event für die Auslassventile realisiert werden kann), in vorteilhafterweise Weise die Zusammensetzung des Abgases beeinflusst werden kann, was für die Regeneration von einer oder mehreren aktiv regenerierbaren Abgasnachbehandlungseinrichtungen ausgenutzt werden kann.

Dementsprechend ist erfindungsgemäß ein Verfahren zum Betreiben einer (vorzugsweise (z.B. mittels (mindestens) eines Abgasturboladers) aufgeladenen) Brennkraftmaschine vorgesehen, wobei die Brennkraftmaschine zumindest einen Verbrennungsmotor, einen Frischgasstrang, einen (mindestens) eine aktiv regenerierbare Abgasnachbehandlungseinrichtung umfassenden Abgasstrang aufweist, wobei für (mindestens) einen Zylinder des Verbrennungsmotors die Zufuhr von Frischgas mittels (mindestens) eines Einlassventils gesteuert wird und die Abfuhr von Abgas mittels (mindestens) eines Auslassventils gesteuert wird. Bei einer solchen Brennkraftmaschine ist vorgesehen, ein Scavenging durchzuführen, indem bei einem Überdruck in dem Frischgasstrang im Bereich des Einlassventils im Vergleich zu dem Druck in dem Abgasstrang im Bereich des Auslassventils ein Spülen von in einem Brennraum des Zylinders vorhandenem Gas durch ein zweites Event für das Einlass- und/oder das Auslassventil erfolgt. Dabei ist vorgesehen, das Scavenging während der Regeneration der Abgasnachbehandlung einzusetzen.

Durch das Scavenging kann erreicht werden, das Frischgas, beim Dieselmotor im wesentlichen Luft, infolge der Ventilüberschneidung von dem Frischgasstrang in den Abgasgasstrang überströmt, wodurch temporär der Luft- und damit Sauerstoffanteil im Abgas erhöht werden kann.

Als "aktiv regenerierbar" wird erfindungsgemäß verstanden, dass für die vollständige Umsetzung von bestimmten als Schadstoffe deklarierten Abgasbestandteilen zu als unschädlich angesehenen Stoffen in der Abgasnachbehandlungseinrichtung eine definierte Abgaszusammensetzung mit dem Ziel der Regeneration erzeugt wird. Diese Abgaszusammensetzung ist anders, als diese wäre, wenn keine Regeneration der Abgasnachbehandlungseinrichtung erfolgt oder erfolgen müsste. Die Regeneration der Abgasnachbehandlungseinrichtung kann dabei kontinuierlich oder diskontinuierlich erfolgen.

Das Scavenging kann zum einen vorteilhaft zur thermischen Regeneration eines Partikelfilters genutzt werden. Dazu sind regelmäßig hohe Temperaturen erforderlich, die wiederum einen hohen Sauerstoffüberschuss im Abgas bedingen. Mittels des Scavenging kann in bekannter Weise eine relativ große Menge unverbrannter Luft in den Abgasstrang eingebracht werden, wodurch der die thermische Regeneration unterstützende Sauerstoffüberschuss realisiert werden kann. Besonders vorteilhaft kann diese Ausführungsform des erfindungsgemäßen Verfahrens bei einem Betrieb der Brennkraftmaschine im Übergang von der mittleren Last zur Volllast eingesetzt werden, da dort infolge einer Begrenzung durch die Pumpgrenze eines Verdichters eines vorzugsweise vorgesehenen Abgasturboladers keine höheren Ladedrücke aber gleichzeitig höhere Massenströme von dem Abgasturbolader der Brennkraftmaschine abverlangt werden können.

Weiterhin kann vorteilhafterweise vorgesehen sein, das Scavenging zur Regeneration eines NOx-Speicherkatalysators zu nutzen. Insbesondere kann dazu ausgenutzt werden, dass mittels des Scavenging ein "Wobbel" um λ = 1, d.h. eine Aneinanderreihung von Bereichen des Abgasstroms, deren Zusammensetzung ein um λ = 1 pendelndes Verhältnis von unverbrannten Kohlenwasserstoffverbindungen und Sauerstoff aufweisen, erzeugt wird. Ein solcher Wobbel basiert darauf, dass das zweite Event für das Einlass- und/oder Auslassventil nur über einen relativ kurzen Zeitraum (Winkelbereich) während der gleichzeitigen (Haupt-)Öffnung des Auslass- und/oder Einlassventils erfolgt. Dadurch kann eine Abgaszusammensetzung erreicht werden, die durch periodisch wechselnde Sauerstoffanteile gekennzeichnet ist. Durch einen Wobbel in der Abgaszusammensetzung kann beispielsweise eine Desulfatisierung des NOₓ-Speicherkatalysators unterstützt werden. Dazu kann der NOₓ-Speicherkatalysator beispielsweise für eine Dauer von mehreren Minuten auf eine Temperatur von mindestens 650°C erhitzt und mit fettem Abgas (A < 1) beaufschlagt werden. Durch die so erreichte fast vollständige (temporäre) Entfernung von Sauerstoff aus dem Abgas kann die Bindung von Sulfat im NOₓ-Speicherkatalysator gelöst werden. Dabei kann durch den Wobbel erreicht werden, dass das ausspeichernde Schwefeldioxid nicht durch dauerhaften Mangel an Restsauerstoff zu Schwefelwasserstoff reduziert wird.

Neben der Ausgestaltung des zweiten Events, das insbesondere durch den Start- und Endzeitpunkt sowie durch den Hubverlauf beeinflussbar ist, kann bei einer erfindungsgemäßen Brennkraftmaschine mit einem mehrzylindrigen Verbrennungsmotor die Ausbildung des Wobbels auch dadurch vorteilhaft beeinflusst werden, indem das zweite Event für entweder alle oder nur einige der Zylinder durchgeführt wird.

Ein Ventiltrieb des Verbrennungsmotors der erfindungsgemäßen Brennkraftmaschine kann vorzugsweise mit schaltbaren Zusatznocken ausgebildet sein, wie dies aus der DE 199 08 286 A1 bekannt ist. Dadurch kann das Scavenging nur in den vorgesehenen Betriebsbereichen des Verbrennungsmotors realisiert werden. Dabei kann auch vorgesehen sein, den Ventiltrieb hinsichtlich der schaltbaren Zusatznocken derart auszubilden, dass diese für die einzelnen Zylinder des Verbrennungsmotors individuell bzw. in Gruppen schaltbar sind. Beispielsweise kann vorgesehen sein, für alle Zylinder ein Scavenging zu realisieren, um in bekannter Weise den Wirkungsgrad eines Abgasturboladers der Brennkraftmaschine zu erhöhen (insbesondere bei niedrigen Drehzahlen mit mittleren bis hohen Lasten, vgl. US 2009/0194080 A1), während für das Scavenging während der Regeneration einer Abgasnachbehandlungseinrichtung nur bei der Hälfte der Zylinder ein zweites Event realisiert wird, um eine entsprechend angepasste Abgaszusammensetzung zu erzielen.

Das Scavenging kann auch gezielt zum Betrieb eines NOx-Speicherkatalysators im Rahmen des aus der o.g. Veröffentlichung von Mikio Inoue et al.: "Di-Air: The New deNOx System for Future Emission Compliance" bekannten DiAir-Verfahrens eingesetzt werden. Auch dort ist ein Wobbel der Abgaszusammensetzung erforderlich, der zudem durch besonders exakt voneinander abgegrenzte Fett/Mager-Bereiche des an dem NOₓ-Speicherkatalysator ankommenden Abgasstroms gekennzeichnet sein sollte. Eine solche exakte Abgrenzung kann durch das Einbringen zusätzlichen Sauerstoffs mittels des Scavenging vorteilhaft unterstützt werden.

In einer besonders bevorzugten Ausgestaltung des erfindungsgemäßen Verfahren kann zudem vorgesehen sein, dass (kurz) vor und7oder während des zweiten Events eine Zusatzeinspritzung von Kraftstoff in den Brennraum erfolgt. Dabei kann bevorzugt vorgesehen sein, dass der Beginn der Zusatzeinspritzung mit dem Beginn des zweiten Events zusammenfällt, wobei auch eine Vorverlagerung von bis zu 15°, vorzugsweise von bis zu 10° vergleichbare Ergebnisse bringen kann. Durch die Zusatzeinspritzung kann beispielsweise eine innermotorische Nacheinspritzung von Kraftstoff, wie sie in bekannter Weise eingesetzt wird, um die Abgastemperatur für beispielsweise eine thermische Regeneration des Partikelfilters zu erhöhen, ergänzt oder sogar ersetzt werden. Die Nachteile, die mit der bekannten Nacheinspritzung einhergehen, können dadurch vermieden werden. Dabei ergibt sich der Vorteil des Einbringens von unverbranntem Kraftstoff in den Abgasstrang mittels des Scavenging insbesondere infolge der vergleichsweise kurzen Verweildauer des zusätzlich eingebrachten Kraftstoffs in dem oder den Zylindern des Verbrennungsmotors. Wandanlagerungen des Kraftstoffs können im Wesentlichen vermieden werden.

Weiterhin kann durch die Zusatzeinspritzung vor und/oder während des zweiten Events eine Eindosierung von Kraftstoff- bzw. Kohlenwasserstoffverbindungen in den Abgasstrang, wie sie bei der bereits erwähnten DPNR-Abgasnachbehandlung oder der darauf aufbauenden, in der o.g. Veröffentlichung von Mikio Inoue et al.: "Di-Air: The New deNOx System for Future Emission Compliance" für die Durchführung des sogenannten DiAir-Verfahrens vorgesehen ist, ergänzt oder ersetzt werden. Auch die zusätzliche Eindosierung von Kraftstoff in den Abgasstrang im Rahmen der sogenannten HCI-Regeneration von Partikelfiltern kann durch eine Zusatzeinspritzung vor oder während des zweiten Events während der Partikelfilterregeneration ergänzt oder ersetzt werden.

Die Erfindung wird nachfolgend anhand eines in den Zeichnungen dargestellten Ausführungsbeispiels näher erläutert. In den Zeichnungen zeigt:
- Fig. 1:: in einer schematischen Darstellung die wesentlichen Komponenten einer für die Durchführung eines erfindungsgemäßen Verfahrens geeigneten Brennkraftmaschine;
- Fig. 2:: in einem Diagramm den Verlauf der Ventilhübe (in mm) eines Einlass- und eines Auslassventil der Brennkraftmaschine über zwei Umdrehungen der Kurbelwelle bei der Verwirklichung von Scavenging;
- Fig. 3:: in einem Diagramm den Druckverlauf (in bar) im Frischgas- und Abgasstrang der Brennkraftmaschine über zwei Umdrehungen der Kurbelwellen bei der Verwirklichung von Scavenging; und
- Fig. 4:: in einem Diagramm den Massenstrom (in g/s) im Frischgas- und Abgasstrang der Brennkraftmaschine über zwei Umdrehungen der Kurbelwellen bei der Verwirklichung von Scavenging; und

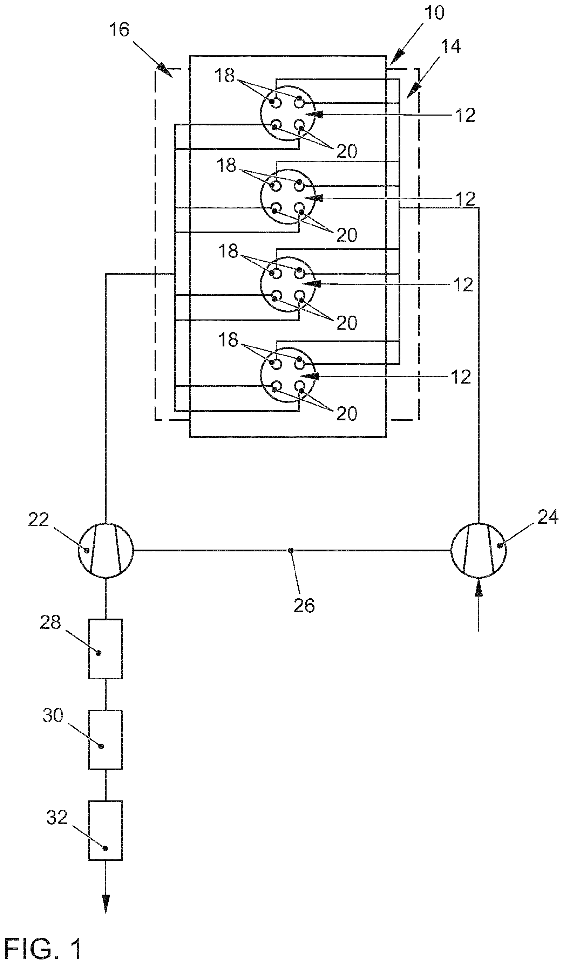

In der Fig. 1 ist schematisch eine erfindungsgemäße Brennkraftmaschine dargestellt. Mittels der Brennkraftmaschine kann beispielsweise ein Kraftfahrzeug angetrieben werden.

Die Brennkraftmaschine umfasst einen Verbrennungsmotor 10, der als Viertakt-Hubkolbenmotor nach dem Diesel-Prinzip betrieben wird. Demnach umfasst der in jedem Zylinder 12 des Verbrennungsmotors 10 umgesetzte Kreisprozess vier Takte: (1) Ansaugen, (2) Verdichten (und Zünden), (3) Arbeiten bzw. Expandieren und (4) Ausstoßen.

Der Verbrennungsmotor 10 bildet in einem Verbund aus Zylinderkurbelgehäuse und Zylinderkopf mehrere (hier: vier) Zylinder 12 aus. Die Zylinder 12 sind einlassseitig mit einem Saugrohr 14 eines Frischgasstrangs und ausgangsseitig mit einem Abgaskrümmer 16 eines Abgasstrangs gasführend verbunden. In bekannter Weise wird in Brennräumen, die von den Zylindern 12 zusammen mit in den Zylinder 12 geführten Kolben ausgebildet sind, Frischgas (Luft) mit Kraftstoff verbrannt. Das dabei entstehende Abgas wird über den Abgasstrang abgeführt. Die Zufuhr des Frischgases in die Brennräume und die Abfuhr des Abgases aus den Brennräumen wird über jeweils zwei Einlassventile 18 und zwei Auslassventile 20 je Zylinder 12 gesteuert, die von einem in der Fig. 1 nicht dargestellten Ventiltrieb des Verbrennungsmotors 10 betätigt werden.

Der Ventiltrieb umfasst eine Kurbelwelle, die mit den Kolben über Pleuel verbunden ist und von der periodischen Linearbewegung der Kolben rotierend angetrieben wird. Die Rotation der Kurbelwelle wird über ein Getriebe auf zwei Nockenwellen übertragen, von denen jede über beispielsweise Kipphebel zwei Ventile jedes Zylinders betätigt. Die Nockenwellen sind dabei als sogenannte gemischte Nockenwellen ausgebildet, d.h. jede von diesen betätigt sowohl ein Einlassventil 18 als auch ein Auslassventil 20 jedes Zylinders 12. Dies wird mittels eines sogenannten gedrehten Ventilsterns erreicht, bei dem die Anordnung der Einlassventile 18 und der Auslassventile 20 gegenüber der Anordnung bei konventionellen Ventiltrieben, bei denen eine Nockenwelle alle Einlassventile und eine zweite Nockenwelle alle Auslassventile betätigt, um 90° verdreht sind.

Die Brennkraftmaschine umfasst weiterhin einen Abgasturbolader. Dieser weist eine in den Abgasstrang integrierte Turbine 22 sowie einen in den Frischgasstrang integrierten Verdichter 24 auf. Ein von dem Abgasstrom rotierend angetriebenes Laufrad der Turbine 22 treibt über eine Welle 26 ein Laufrad des Verdichters 24 an. Die so bewirkte Rotation des Laufrads des Verdichters 24 verdichtet das durch diesen hindurch geführte Frischgas.

Weiterhin sind mehrere Abgasnachbehandlungseinrichtungen in den Abgasstrang integriert. Hierbei handelt es sich um einen Oxidationskatalysator 28, einen diesem nachgeschalteten NOₓ-Speicherkatalysator 30 sowie einen diesem nachgeschalteten Partikelfilter 32.

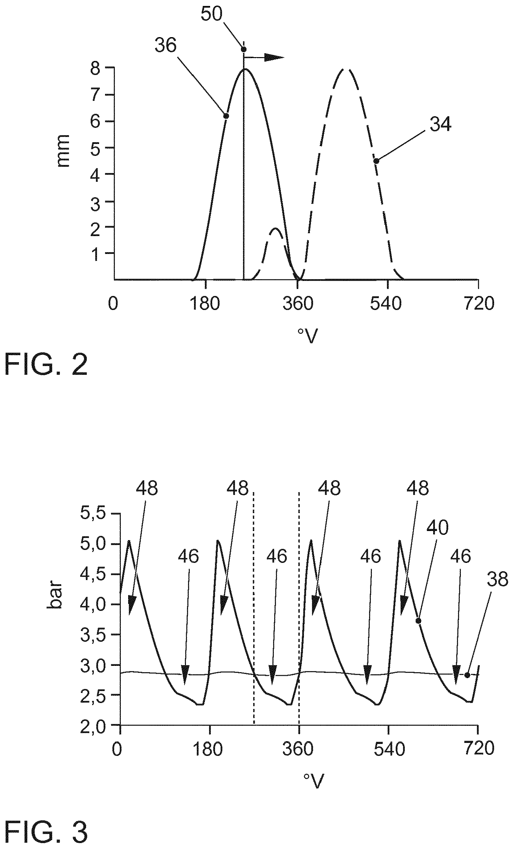

Die Fig. 2 zeigt in einem Diagramm den Verlauf des Ventilhubs eines Einlassventils 18 (gestrichelte Linie 34) sowie eines Auslassventils 20 (durchgezogene Linie 36) eines Zylinders 12 über dem Verlauf von zwei Umdrehungen (0° bis 720°) der Kurbelwelle (entspricht einer Umdrehung der die Einlassventile 18 und Auslassventile 20 steuernden Nockenwellen).

Die Fig. 3 zeigt in einem Diagramm den Verlauf des (Absolut-)Drucks in einem motornahen Abschnitt (z.B. dem Saugrohr 14) des mit allen Zylindern 12 des Verbrennungsmotors 10 verbundenen Frischgasstrangs (gestrichelte Linie 38) sowie in einem motornahen Abschnitt (z.B. dem Abgaskrümmer 16) des mit allen Zylindern 12 des Verbrennungsmotors 10 verbundenen Abgasstrangs (durchgezogene Linie 40), wiederum über dem Verlauf von zwei Umdrehungen der Kurbelwelle.

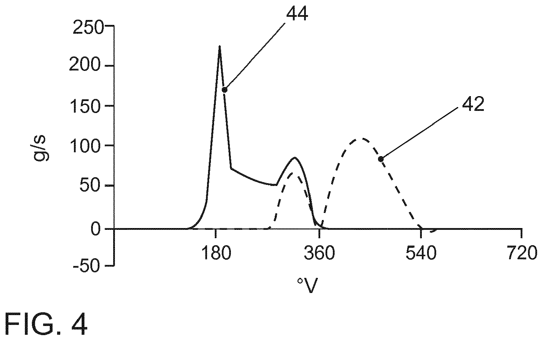

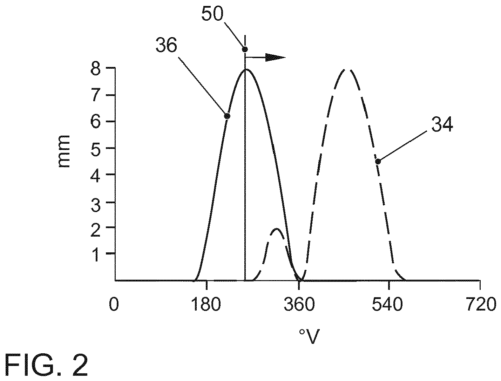

In dem Diagramm der Fig. 4 ist der entsprechende Verlauf des Massenstroms in demselben Abschnitt des Frischgasstrangs (gestrichelte Linie 42) und des Abgasstrangs (durchgezogene Linie 44) dargestellt.

Wie sich aus der Fig. 3 ergibt, ist der Druckverlauf im Frischgasstrang vergleichsweise konstant, während derjenige im Abgasstrang relativ stark schwankt, wobei der Druck im Abgasstrang phasenweise unterhalb (Unterdruckbereiche 46) und phasenweise oberhalb (Überdruckbereiche 48) des Drucks im Frischgasstrang liegt. Dabei kommen auf zwei Umdrehungen der Kurbelwelle infolge der insgesamt vier mit dem Frischgas- und dem Abgasstrang verbundenen Zylinder 12 vier Überdruckbereiche 48 und vier Unterdruckbereiche 46.

Liegt der Druck im Abgasstrang unterhalb des Drucks im Frischgasstrang, besteht ein Druckgefälle vom Frischgasstrang zum Abgasstrang, das bei gleichzeitig geöffneten Einlass- 18 und Auslassventilen 20 der einzelnen Zylinder 12 ein Scavenging bewirken kann. Ein Scavenging wird realisiert, indem ein so genanntes zweites Event für die von einer der zwei Nockenwellen betätigten Einlassventile 18 erzeugt wird. Dazu werden die entsprechenden Einlassventile 18 - zusätzlich zu dem Hauptöffnen während des Ansaugtakts (360° bis 540°) - auch in ca. der zweiten Hälfte des Ausstoßtakts (180° bis 360°) und somit zeitgleich mit den Auslassventilen 20 geöffnet. Dabei erfolgt das Öffnen beim zweiten Event mit deutlich geringerem Hub als dies für das Hauptöffnen vorgesehen ist.

Das zweite Event erfolgt in einer Phase, in der ein Druckgefälle vom Frischgasstrang zum Abgasstrang herrscht (Unterdruckbereiche 46 in der Fig. 3). Dieses Druckgefälle bewirkt ein Überströmen von Frischgas in den Abgasstrang und somit einen erhöhten Massenstrom im Abgas- und damit auch im Frischgasstrang. Dieser erhöhte Massenstrom bewirkt in bekannter Weise eine höhere Leistung des Abgasturboladers und damit eine Erhöhung des von dem Verbrennungsmotor 10 erzeugbaren Drehmoments. Zudem kann das Scavenging ein Ausspülen von in den Zylindern 12 befindlichem Restgas in den Abgasstrang unterstützen. Dadurch kann die Menge des in den Zylindern 12 enthaltenen Frischgases und damit auch die Menge des umsetzbaren Kraftstoffs erhöht werden. Dies unterstützt wiederum die Erzielung eines hohen Drehmoments durch den Verbrennungsmotor 10. Dieses bekannte Scavenging mit dem Ziel, die Leistung und das Betriebsverhalten des aufgeladenen Verbrennungsmotors 10 zu verbessern, wird insbesondere eingesetzt, wenn dieser mit niedrigen Drehzahlen und mittleren bis hohen Lasten betrieben wird. In den übrigen Betriebsbereichen (d.h. insbesondere immer bei mittleren bis hohen Drehzahlen) kann dagegen vorgesehen sein, kein Scavenging durchzuführen, so dass dann für die Einlassventile 18 kein zweites Event realisiert wird. Das Aktivieren und Deaktivieren des zweiten Events kann durch die Ausgestaltung des Ventiltriebs mit schaltbaren Zusatznocken erfolgen, wie dies beispielsweise in der DE 199 08 286 A1 offenbart ist.

Erfindungsgemäß ist zudem vorgesehen, das Scavenging während der aktiven Regeneration des NOx-Speicherkatalysators 30 und des Partikelfilters 32 einzusetzen. Durch den so erzielten hohen Sauerstoffanteil im Abgas kann eine Desulfatisierung des NOx-Speicherkatalysators 30 und der Rußabbrand in dem Partikelfilter 32 unterstützt beziehungsweise ermöglicht werden. In Kombination mit einer in dem jeweiligen Zylinder 12 erfolgenden Zusatzeinspritzung von Kraftstoff zu Beginn des zweiten Events (vgl. Fig. 2, Einspritzzeitpunkt 50) kann zudem die im Stand der Technik bekannte Nacheinspritzung von Kraftstoff ersetzt werden. Dabei kann infolge der auf die mehreren Zylinder 12 verteilten und somit taktweisen sowie nur einen Teil des jeweiligen Ausstoßtakts umfassenden zweiten Events, ein Wobbel in der Abgaszusammensetzung erzeugt werden, der bei der Desulfatisierung des NOₓ-Speicherkatalysators 30 einen dauerhaften Sauerstoffmangel und damit eine Reduzierung des ausspeichernden Schwefeldioxids zu Schwefelwasserstoff vermeiden kann. Auch besteht die Möglichkeit, die Brennkraftmaschine anhand des aus der o.g. Veröffentlichung von Mikio Inoue et al.: "Di-Air: The New deNOx System for Future Emission Compliance" bekannten DiAir-Verfahrens zu betreiben, wofür ebenfalls ein Wobbel in der Abgaszusammensetzung erforderlich ist. Dadurch kann der NOₓ-Speicherkatalysator 30 zumindest in bestimmten Betriebsbereichen (insbesondere hohe Lasten und/oder Drehzahlen des Verbrennungsmotors 10) infolge der dann erreichten Fähigkeit des NOₓ-Speicherkatalysator 30, eine direkten Umsetzung von NO2 zu Nitraten und deren Reduktion zu N2 auch bei hohen Abgastemperaturen vorzunehmen, kontinuierlich regeneriert werden.

### Bezugszeichenliste

- 10: Verbrennungsmotor
- 12: Zylinder
- 14: Saugrohr
- 16: Abgaskrümmer
- 18: Einlassventil
- 20: Auslassventil
- 22: Turbine
- 24: Verdichter
- 26: Welle
- 28: Oxidationskatalysator
- 30: NOx-Speicherkatalysator
- 32: Partikelfilter
- 34: Ventilhub eines Einlassventils
- 36: Ventilhub eines Auslassventils
- 38: Druckverlauf im Frischgasstrang
- 40: Druckverlauf im Abgasstrang
- 42: Massenstrom im Frischgasstrang
- 44: Massenstrom im Abgasstrang
- 46: Unterdruckbereich
- 48: Überdruckbereich
- 50: Einspritzzeitpunkt für Zusatzeinspritzung

## Patentansprüche

1. Verfahren zum Betreiben einer Brennkraftmaschine mit einem Verbrennungsmotor (10) einem Frischgasstrang, einem eine aktiv regenerierbare Abgasnachbehandlungseinrichtung umfassenden Abgasstrang, wobei für einen Zylinder (12) des Verbrennungsmotors (10) die Zufuhr von Frischgas mittels eines Einlassventils (18) gesteuert wird und die Abfuhr von Abgas mittels eines Auslassventils (20) gesteuert wird, wobei ein Scavenging durchgeführt wird, indem bei einem Überdruck in dem Frischgasstrang im Bereich des Einlassventils (18) im Vergleich zu dem Druck in dem Abgasstrang im Bereich des Auslassventils (20) ein Spülen von in einem Brennraum des Zylinders (12) vorhandenem Gas durch ein zweites Event für das Einlassventil (18) und/oder das Auslassventil (20) erfolgt, **dadurch gekennzeichnet, dass** das Scavenging während der Regeneration der Abgasnachbehandlungseinrichtung eingesetzt wird.

2. Verfahren gemäß Anspruch 1, **dadurch gekennzeichnet, dass** das Scavenging während der thermischen Regeneration eines Partikelfilters (32) eingesetzt wird.

3. Verfahren gemäß Anspruch 1 oder 2, **dadurch gekennzeichnet, dass** das Scavenging während der Regeneration eines NOx-Speicherkatalysators (30) eingesetzt wird.

4. Verfahren gemäß Anspruch 3, **dadurch gekennzeichnet, dass** mittels des Scavenging ein Wobbel um λ = 1 für die Abgaszusammensetzung erzeugt wird.

5. Verfahren gemäß einem der vorhergehenden Ansprüche, **dadurch gekennzeichnet, dass** vor oder während des zweiten Events eine Zusatzeinspritzung von Kraftstoff in den Brennraum erfolgt.

## Claims

1. Method for operating an internal combustion engine having an internal combustion engine (10), a fresh-gas tract, and an exhaust tract which has an actively regenerable exhaust-gas aftertreatment device, wherein, for a cylinder (12) of the internal combustion engine (10), the supply of fresh gas is controlled by means of an inlet valve (18) and the discharge of exhaust gas is controlled by means of an outlet valve (20), wherein scavenging is performed in that, in the presence of a positive pressure in the fresh-gas tract in the region of the inlet valve (18) in relation to the pressure in the exhaust tract in the region of the outlet valve (20), scavenging of gas present in a combustion chamber of the cylinder (12) occurs as a result of a second event for the inlet valve (18) and/or the outlet valve (20), **characterized in that** the scavenging is used during the regeneration of the exhaust-gas aftertreatment device.

2. Method according to Claim 1, **characterized in that** the scavenging is used during the thermal regeneration of a particle filter (32).

3. Method according to Claim 1 or 2, **characterized in that** the scavenging is used during the regeneration of a NOx storage catalytic converter (30).

4. Method according to Claim 3, **characterized in that** an oscillation around λ = 1 for the exhaust-gas composition is generated by means of the scavenging.

5. Method according to one of the preceding claims, **characterized in that** an additional injection of fuel into the combustion chamber is performed before or during the second event.

## Revendications

1. Procédé pour faire fonctionner un moteur à combustion interne comprenant un moteur à combustion (10) une section de gaz frais, une section de gaz d'échappement comprenant un dispositif de post-traitement de gaz d'échappement à régénération active, l'alimentation en gaz frais étant commandée au moyen d'une soupape d'admission (18) pour un cylindre (12) du moteur à combustion interne (10) et l'évacuation des gaz d'échappement étant commandée au moyen d'une soupape d'échappement (20), une récupération étant effectuée par le fait qu'en cas de surpression dans la section de gaz frais dans la région de la soupape d'admission (18) par rapport à la pression dans la section de gaz d'échappement dans la région de la soupape d'échappement (20), un rinçage du gaz présent dans la chambre de combustion du cylindre (12) est effectué par un deuxième événement pour la soupape d'admission (18) et/ou pour la soupape d'échappement (20), **caractérisé en ce que** la récupération est établie pendant la régénération du dispositif de post-traitement de gaz d'échappement.

2. Procédé selon la revendication 1, **caractérisé en ce que** la récupération est établie pendant la régénération thermique d'un filtre à particules (32).

3. Procédé selon la revendication 1 ou 2, **caractérisé en ce que** la récupération est établie pendant la régénération d'un catalyseur à accumulation de NOₓ (30).

4. Procédé selon la revendication 3, **caractérisé en ce qu'**une oscillation λ = 1 pour la composition de gaz d'échappement est produite au moyen de la récupération.

5. Procédé selon l'une quelconque des revendications précédentes, **caractérisé en ce qu'**avant ou pendant le deuxième événement, une injection supplémentaire de carburant a lieu dans la chambre de combustion.
